# EUROPEAN PATENT APPLICATION

(11) **EP 1 616 741 A1**
(43) Date of publication of application: **18.01.2006**
(21) Application number: 03816659.1
(22) Date of filing: 18.04.2003
(51) Int. Cl.: B60K 7/00, H02K 21/26

(54) **ELECTRIC MOTOR**

(71) Applicant: Ultra Motor Company Limited, Liverpool, L69 3FT (GB)
(72) Inventor: SHKONDIN, Vasily Vasilievich, Moscow, 125502 (RU)
(74) Representative: Harrison Goddard Foote
(86) International application number: PCT/RU2003/000178
(87) International publication number: WO 2004/091957

(57) **Abstract**

An electric motor, the stator of which carries permanent magnets, and the rotor of which carries electromagnets, is described.

A particular arrangement of connecting up the windings of the electromagnets to the distributing collector and the selection of the ratio of stator magnets to rotor electromagnets enable higher torque to be achieved.

The main field of application of the invention is in motor-wheels of vehicles.

## Description

### Technology field

The invention relates to electric motors, primarily for vehicles, in the form of motor-wheels, and is intended for use in electrically propelled bicycles, wheelchairs, scooters, motorcycles, buses, and also winches, cranes etc.

### Technology level

Collector motor-wheels with no reduction gear, in which the rotation of the wheel is brought about directly by the electromagnetic interaction of magnetic stator-and-rotor system, are known (SU 628008 A, 15.10.1978; SU 910480 A, 07.03.1982; SU 1725780 A3, 07.04.1992; US 5164623 B1, US 6492756 B1, 10.12.2002).

The closest analogue to the proposed invention is an electric motor for a vehicle, containing a stator with an even number of permanent magnets located in a circle at uniform pitch, a rotor with electromagnets, a distributing collector having conducting plates round its circumference, combined in a set order into groups with positive and negative polarity, connected to a direct current supply and separated by dielectric gaps, and also brushes contacting the said collector, connected to the windings of the electromagnet coils (US 6384496 B1, 07.05.2002).

A significant fault of this motor is its low torque, which severely limits its field of practical application.

It should be noted that various technical solutions for increasing the torque of motor wheels are already known; however, they involve the use of high-voltage power supplies and complex control circuits, so that they are difficult to produce and not very reliable in use.

### Substance of the invention

The aim of the invention is to improve the technical characteristics of an electric motor of the type under consideration, primarily to increase its torque.

Another aim of this invention is to provide increased torque without significant complication of the design or use of the motor.

It has been established experimentally by the author of the invention that a solution to this problem can be found by selecting a specific ratio, and corresponding disposition of the number of electromagnets in the rotor, the permanent magnets in the stator and the collector plates, and their position relative to each other, and also by a specific way of connecting the electromagnet coils to the supply.

The coils of adjacent electromagnets in the rotor, in accordance with the invention, are connected in pairs, in series aiding, and to the coils of a pair of diametrically opposite electromagnets, in series opposing; the leads of their windings, connected to the corresponding brushes, are shunted by capacitors, so that each two pairs of diametrically opposite electromagnets, together with the capacitor, form a resonant circuit. The number (n) of permanent magnets in the stator and the number (m) of the said resonant circuits are determined from the equations n=10+k, m=2+k, where k is a whole number (k=0,1,2,3...), the number of plates in the distributing collector is taken as equal to n, and the axial lines of the dielectric gaps in the distributing collector are aligned along the axial lines of the permanent magnets in the stator.

Such a relation of the number of electromagnets, permanent magnets and collector plates, and such an electromagnet commutation circuit containing capacitors, provides resonance of currents in the low frequency circuits formed by the pairs of diametrically opposite electromagnets and the capacitors connected to them. The rating of the capacitors should be coordinated with the number of coil windings shunted by these capacitors.

It was unexpectedly discovered that the resonance phenomena are amplified in the event of the number of loops in the coil windings electrically connected to each other (diametrically opposite electromagnets) differing from each other by an integral multiple.

The ratio between the numbers of loops in the windings of the one and the other diametrically opposite electromagnets in each pair should be 1/32, 1/16. 1/8 or 1/4.

The rotor can be located outside or inside the stator.

The brushes may be able to be displaced round the circumference relative to the collector in order to adjust the commutation of the electromagnet coils.

### Brief description of the drawings

Figs. 1 and 2 show a side view of an electric motor made in accordance with the invention for two possible versions: with an external rotor (Fig. 1) and an internal one (Fig. 2).
Fig. 3 shows a graph of the voltage in the leads of the electromagnet coils connected to each other, forming a resonant circuit with the capacitor connected to them.

### Examples of the implementation of the invention

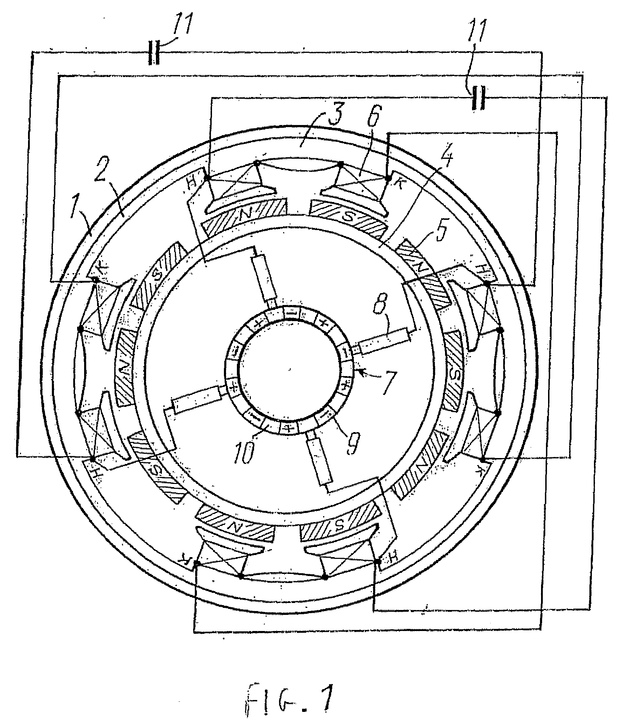

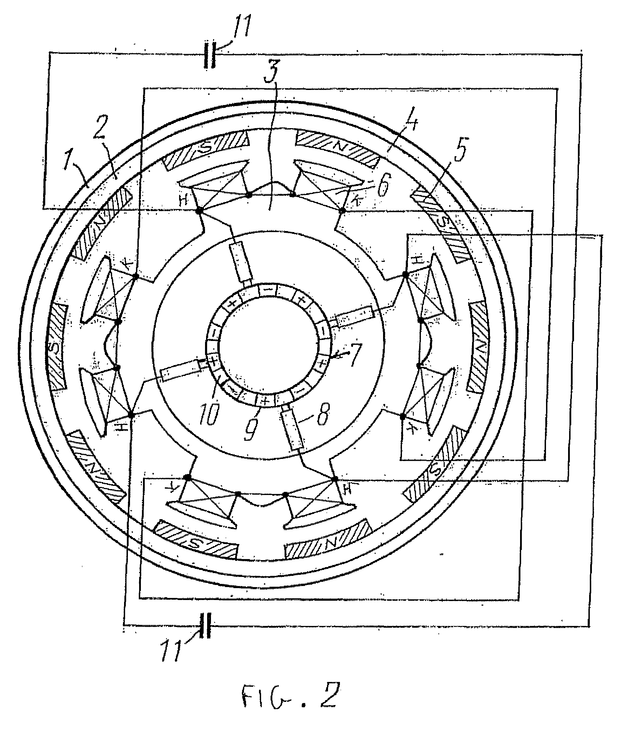

As is apparent from Figs. 1 and 2, the electric motor made in accordance with this invention contains a shell (1), serving as a casing, a stator (2) and a rotor (3).

In the variant of the invention shown in Fig. 1, the rotor (3) is located outside the stator, and in the variant shown in Fig. 2, inside the stator. In the structure of the motor-wheel, the rotor is connected to the rotated wheel (not shown); as applied to this invention, a direct connection with no reduction gear is advisable. The electric motor stator (2) has a cylindrical magnetic conductor (4), to which permanent magnets (5) of alternating polarity are fixed.

The electric motor rotor (3) carries electromagnets (6), the coils of which, when the motor is running, receive direct current from a DC supply (not shown) via the collector distributor (7) and the brushes (8). The collector distributor (7) is fixed, but the brushes (8) are connected to the rotor, and as it rotates, they are displaced relative to the conducting plates (9) of the collector distributor. The said plates are connected to the DC supply with alternating polarity and are separated from each other by dielectric gaps (10).

The principle of operation of an electric motor made in accordance with this invention is no different from normal. The change of polarity of the rotor electromagnets as the brushes connected to them are displaced relative to the collector plates connected alternately to different poles of the DC supply, with the alternating polarity of the permanent magnets in the stator, creates an attraction of each electromagnet of the rotor to the magnet of the stator nearest to it in the direction of rotation of the rotor, and a repulsion from the preceding one.

The novelty of the electric motor made in accordance with this invention lies in the strictly determined ratio of the number of stator magnets, rotor electromagnets and conducting collector plates, and also in the manner in which the electromagnet coils are connected up. The coils of two adjacent electromagnets are connected to each other in series aiding (in Figs. 1 and 2, this corresponds to the connection from the beginning of the winding, denoted by "H", to the end, denoted by "K"), but to the pair of coils of the electromagnets located diametrically opposite, in series opposing (from the end "K" to the beginning "H"); the ends of the windings not connected to each other (the "free" ends) are connected to the brushes (8) and are simultaneously shunted by capacitors (11) to form a resonant circuit.

The set number of permanent magnets in the stator must be compatible with the set number of pairs of such circuits. Thus, the variant of the motor in accordance with Figs. 1 and 2 with two resonant circuits must have a stator with 10 permanent magnets and with precisely the same number of conducting plates (9) of the collector distributor. The overall relationship of the ratios of resonant circuits and number of permanent magnets is determined from the equations n=10+4k, m=2+k, where n is the number of magnets, m is the number of circuits and k is a whole number (k=0,1,2,3...). On the basis of these equations, for 14 stator magnets, there should be three resonant circuits, and so on.

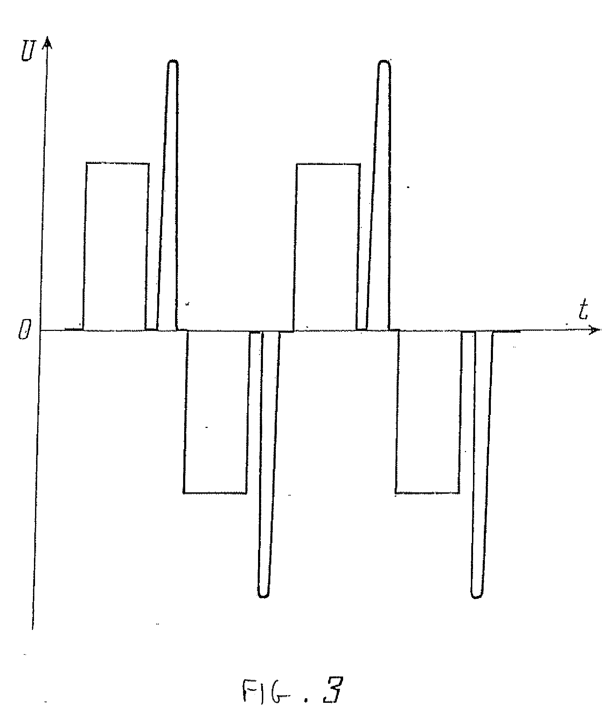

The number of conducting plates of the collector distributor must be equal to the number of permanent magnets in the stator, and the axial lines of the dielectric gaps (10) between the plates must coincide with the axial lines of the permanent magnets. As can be seen from the voltage graph shown in Fig. 3, the way that each of the circuits is connected up in turn via the brushes connected to the rotor to the different-polarity collector plates as the rotor rotates creates alternating current in them, as a result of which current resonance occurs in the circuit, thus increasing the torque created by the motor. This effect is enhanced by the different number of loops in the coil windings.

The number of loops in the coils of the diametrically opposite electromagnets differs between them by 1/32, 1/16, 1/8 and in certain cases 1/4.

If, for example, in one of the pairs of series-wired coils, the number of loops is 128, the number in the second pair (diametrically opposite) must be 124, which is a ratio of 1/32, or 120 for a ratio of 1/16 and so on.

The rating of the capacitor (11) depends on the total inductance of the series-wired windings shunted by them.

### Industrial applicability

Since the motor in accordance with the invention can achieve high torque for relatively low voltage supply rating, and is simple in design, it has a wide range of possible applications.

A prototype motor made in accordance with the invention, with the parameters:
- diameter -: 400 mm
- weight -: 16 kg
- power -: 5.5 kW
- voltage -: 48 V

creates torque of up to 500 Nm. The motor has 22 permanent magnets in the stator and five resonant circuits. The electromagnet windings are calculated for the ratio 1/16.

## Claims

1. Electric motor, containing:
- a stator with a circular magnetic conductor, to which an even number of permanent magnets is attached at uniform pitch;
- a rotor, separated from the stator by an air gap and carrying electromagnets interacting with the permanent magnets in the stator;
- a distributing collector, fixed to the body of the stator and having current conducting plates round its circumference, connected at alternating polarity to a direct current supply and separated by dielectric gaps;
- brushes, connected to the rotor, able to contact the collector plates and connected to electromagnet coil windings, ***characterised* in that** the coil windings of adjacent electromagnets are connected in pairs in series aiding, and to the windings of the coils of a pair of diametrically opposite electromagnets in series opposing, with capacitors connected to the leads of the windings connected to the brushes to form resonant circuits, the number (n) of the permanent magnets of the stator and the number (m) of the resonant circuits being determined from the equations n=10+4k, m=2+k, where k is a whole number (k=0,1,2,3...), the number of plates in the distributing collector is equal to the number of magnets in the stator, and the axial lines of the dielectric gaps in the distributing collector are aligned along the axial lines of the permanent magnets of the stator.

2. Electric motor in accordance with claim 1, ***characterised* in that** the number of loops in the coil windings of diametrically opposite electromagnets is different, the difference being 1/32, 1/16, 1/8 or 1/4.

3. Electric motor in accordance with claim 1 or 2, ***characterised* in that** the rating of the capacitor connected to the electromagnet coil windings is proportional to the total number of loops in these windings.

4. Electric motor in accordance with claim 1, ***characterised* in that** the rotor is located outside the stator.

5. Electric motor in accordance with claim 1, ***characterised* in that** the rotor is located inside the stator.

6. Electric motor in accordance with any of claims 1-5, ***characterised* in that** the brushes are able to be adjusted in position on the circumference relative to the collector.
